# EUROPÄISCHE PATENTANMELDUNG

(11) **EP 3 216 557 A1**
(43) Veröffentlichungstag der Anmeldung: **13.09.2017**
(21) Anmeldenummer: 16159864.4
(22) Anmeldetag: 11.03.2016
(51) Int. Cl.: B23Q 1/70, B23B 29/034, B23Q 27/00

(54) **WERKZEUGSPINDEL**

(71) Anmelder: Kochsiek, Adolf, 33818 Leopoldshöhe (DE)
(72) Erfinder: KOCHSIEK, Adolf, 33818 Leopoldshöhe (DE)
(74) Vertreter: Rausch.Wanischeck.Brinkmann.Intellectual Property

(57) **Zusammenfassung**

Die Erfindung betrifft eine Werkzeugspindel mit einem Spindelgehäuse, einem Drehantrieb, einer Werkzeugaufnahmeeinheit, wobei die Werkzeugaufnahmeeinheit innerhalb des Spindelgehäuses und dieser gegenüber bewegbar angeordnet ist, welche multifunktional einsetzbar ist, mit der sowohl herkömmliche Bearbeitungen wie Bohren und Fräsen sowie Drehen als auch neuartige Bearbeitungen wie Unrunddrehen jeweils ohne Schaden für die Spindel und mit hoher industrieller Fertigungsqualität durchführbar sind.

## Beschreibung

Die vorliegende Erfindung betrifft eine Werkzeugspindel. Derartige Werkzeugspindeln werden in Maschinen zur spanenden Bearbeitung von Werkstücken eingesetzt und dienen der Aufnahme von Bearbeitungswerkzeugen. Die Bearbeitungswerkzeuge werden üblicher Weise über eine in der Werkzeugspindel befindliche Werkzeugschnittstelle aufgenommen und fest eingespannt.

Im Stand der Technik bekannt sind die unterschiedlichsten Vorrichtungen zur spanenden Bearbeitung von Werkstücken. Zum einen gehören dazu Drehmaschinen. Bei diesen wird das Werkstück gedreht, während das Werkzeug feststehend sowohl axial als auch radial gegenüber dem Werkstück bewegt wird. Mit diesem Verfahren werden runde, rotationssymmetrische Konturen aus dem Werkstück herausgearbeitet.

Weiterhin bekannt sind Bohrmaschinen, bei welchen ein Bohrer rotiert und gegenüber einem feststehenden Werkstück vorgetrieben wird. Auf diese Weise entstehen im Werkstück Bohrungen.

Weiterhin bekannt sind Fräsmaschinen. Ein rotierender Fräskopf wird gegenüber einem feststehenden Werkstück radial und axial bewegt und erzeugt auf diese Weise Fräsnuten, Fräsflächen, Freiformflächen und dergleichen im Werkstück.

Es ist auch bekannt, entsprechende Werkzeugspindeln in Bearbeitungszentren einzusetzen. Diese werden dann automatisch mit entsprechenden Werkzeugen bestückt.

Schlussendlich sind auch Maschinen zur Herstellung unrunder Konturen bekannt. Man spricht vom sogenannten Unrunddrehen. Sowohl ein drehendes Werkzeug mit einem Schneidkopf als auch das drehende Werkstück werden hinsichtlich ihrer Umdrehungen relativ zueinander gesteuert. Damit werden an dem Werkstück unrunde Konturen erzeugt. Derartige Verfahren sind beispielsweise bekannt aus EP-PS 0097346 oder EP 09074458 B2.

In der Regel umfasst eine Werkzeugspindel einen Drehantrieb, zum Beispiel einen Antriebsmotor, eine rotierende Antriebsachse, die von dem Antriebsmotor angetrieben wird, sowie nach einer Getriebekette eine Abtriebsachse, in welche eine Werkzeugaufnahme integriert ist. In einer derartigen Spindel ist die Mitte der Abtriebsachse zugleich die Werkzeugmitte. Setzt man einen Bohrer oder einen Fräser ein, kann man entsprechende Bearbeitungen durchführen. Derartige vorbekannte Spindeln können nicht zum Unrunddrehen eingesetzt werden, da die Werkzeugschneide nicht auf ihrem Flugkreis relativ zur Werkzeugspindelmitte bewegt werden kann.

Um mit derartigen Vorrichtungen zu Drehen, muss ein Werkzeug mit seiner Schneide ausgerichtet und die Abtriebsachse von der Antriebsachse entkoppelt und geklemmt werden oder der Antrieb in einen Lagerregelungsmodus versetzt werden. Beim Drehen wirken erhebliche Momente und Kräfte auf das Schneidwerkzeug, und zwar sowohl radial als auch axial, welche von dem System aufgenommen werden müssen.

Bei Unrunddrehvorrichtungen wiederum wird ein Werkstück in eine Werkstückspindel eingespannt und rotiert um eine Werkstückdrehachse. Das Werkzeug seinerseits sitzt in einer Werkzeugspindel und dreht um eine Werkzeugdrehachse. Die Spindeln sind in an sich bekannter Weise auf Schlitten und Schiebern angeordnet, sodass axiale und radiale Relativbewegungen zwischen Werkstück und Werkzeug durchgeführt werden können. Das Werkzeug seinerseits bewegt sich nicht zwingend um eine zentrische Achse bezogen auf das Werkstück, sondern führt auch Drehbewegungen um eine einstellbare exzentrische Achse durch. Zusätzlich kann ein sogenannter Werkzeugflugkreis verändert werden. Durch die unterschiedlichen Verstellungen wird Einfluss genommen auf die Anzahl der Ecken in der unrunden Kontur (Drehzahlverhältnisse), die Eindringtiefe der Werkzeuges (Flugkreis) usw.

Mit Unrunddrehvorrichtungen kann man zwar grundsätzlich auch Bohren und Fräsen sowie normal Drehen, indem man wie bei herkömmlichen Vorrichtungen die Drehachsen entsprechend konstant hält, allerdings wirken beim Bohren und Fräsen sämtliche Kräfte auf die Lageregelung der Achsen und beim Drehen erhebliche Torsions- und Querkräfte auf die Vorrichtung, sodass keine exakte industrielle Fertigung möglich ist.

Vorbekannte Vorrichtungen zum Unrunddrehen sind hinsichtlich der möglichen Drehzahlen beschränkt, da es mit steigenden Drehzahlen zu erheblichen Auswirkungen von Unwucht kommen kann. Darüber hinaus sind sie hinsichtlich des Einsatzfalles beschränkt, weil eine Kühlmittelzuführung von außen nur unzureichenden Effekt hat. In vielen Einsatzfällen ist die Steifigkeit der Anlagen nicht ausreichend.

Mit herkömmlichen Drehmaschinen und Bearbeitungszentren, welche drehen bohren fräsen können, sind Bearbeitungsgrenzen gesetzt. Weder können konische noch stufenförmige Formen gefertigt werden, es lassen sich nicht ohne weiteres Fasen herstellen. Unrunde Teile können überhaupt nicht gefertigt werden. Feinstkorrekturen beispielsweise durch das Ausdrehen von geringfügig zu kleinen Bohrungen oder dergleichen sind ebenfalls nicht möglich. Setzt man in herkömmliche Werkzeugspindeln in Art eines eingesetzten Werkzeugs eine Zusatzeinrichtung ein, wird wohl ein Unrunddrehen ermöglicht, erhöht man jedoch die Baugröße automatisch und macht damit den üblicherweise automatischen Werkzeugwechsel unmöglich. In anderen Worten, es erfordert Rüstarbeit und durch das Umrüsten entsprechende Ausfallzeiten, zusätzlich geht Bearbeitungsbauraum verloren, was die Verwendungsmöglichkeit der Maschine einschränkt. Darüber hinaus ist eine derartige Anordnung nicht ausreichend steif für die auftretenden Kräfte und hinsichtlich der Bearbeitungszeit beziehungsweise Drehgeschwindigkeiten beschränkt.

Ausgehend vom vorbeschriebenen Stand der Technik liegt der Erfindung die Aufgabe zugrunde, eine Werkzeugspindel bereitzustellen, welche multifunktional einsetzbar ist, mit der also sowohl herkömmliche Bearbeitungen wie Bohren und Fräsen sowie Drehen als auch neuartige Bearbeitungen wie Unrunddrehen jeweils ohne Schaden für die Spindel und mit hoher industrieller Fertigungsqualität durchführbar sind. Dabei ist großer Wert auf eine kompakte Bauform zu legen um den Bearbeitungsraum nicht einzuschränken.

Zur technischen Lösung wird mit der Erfindung vorgeschlagen eine Werkzeugspindel mit den Merkmalen des Anspruchs 1. Weitere Vorteile und Merkmale ergeben sich aus den Unteransprüchen.

Gemäß der Erfindung wird also eine herkömmliche Werkzeugspindel so weitergebildet, dass diese nicht nur verbessert für die bisherigen Aufgaben einsetzbar ist, das heißt bohren, drehen, fräsen, sondern darüber hinaus in Verbindung mit der Hauptspindel unrund drehen kann. Dabei wird die Baugröße nicht erhöht, automatische Werkzeugwechsel sind ohne weiteres möglich und die neuartige Werkzeugspindel wird multifunktional.

Erfindungsgemäß ist die Werkzeugverstellvorrichtung in der Welle der Werkzeugspindel untergebracht. Diese Werkzeugverstellvorrichtung enthält eine Werkzeugverstelleinheit, die gegenüber der Welle bewegbar ist, wobei nicht die Drehung um die Drehachse gemeint ist, sondern parallel oder quer zur Drehachse der Welle verschiebbar, verschwenkbar und dergleichen. Auch umfasst sie eine Werkzeugaufnahmeeinrichtung beziehungsweise -einheit, in welcher ein Werkzeug einsetzbar ist.

Mit der Erfindung wird vorgeschlagen, dass die Werkzeugaufnahmeeinheit eine Verstelleinheit aufweist, die gegenüber der Welle um eine quer oder parallel zur Drehachse liegende Achse bewegbar ist.

Durch diese erfindungsgemäße Ausgestaltung ergeben sich nun eine Reihe von Vorteilen. Es ist nun möglich, die Verstelleinheit relativ zur Welle festzusetzen, also zu verriegeln oder stufenlos zu verklemmen. Auf diese Weise sind beim Bohren und Fräsen keine Auswirkungen auf die Lageregelung und die Achsen zu befürchten. Die Präzision und die Steifigkeit der Werkzeugeinspannung werden damit erhöht.

Es lässt sich ohne weiteres ein direktes Messsystem integrieren, wobei auch möglich ist, die Messsystemsignale berührungslos zu übertragen.

Die Werkzeugaufnahme kann so ausgebildet sein, dass sie einen automatischen Werkzeugwechsel ermöglicht, indem eine entsprechende automatische Spanneinrichtung integriert wird. Der korrekte Sitz des Werkzeugs kann durch eine Einrichtung kontrolliert werden, die erkennt, wenn das Werkzeug gespannt ist.

Der Antrieb der Verstelleinheit kann als hydraulischer Antrieb ausgeführt sein. So kann beispielsweise die Position der Werkzeugschneide hydraulisch gesteuert werden.

Durch die Ausgestaltung der Werkzeugspindel, insbesondere der Welle ist es möglich, Kanäle für Hydraulik, Pneumatik und insbesondere für die Zuführung von Kühlmittel durch die Spindel vorzusehen.

Ein zylindrisches Spindelgehäuse bietet definierte Bedingungen für Einbauten, Modularisierung und Zusatzeinheiten.

Es ist ohne weiteres möglich, eine Unwuchtkompensation durchzuführen.

Durch die Möglichkeit der mechanischen Klemmung bzw. Verriegelung der Werkzeugverstelleinheit, kann eine extrem steife Verbindung realisiert werden, was insbesondere beim Fräsen und Bohren die Erzielung optimaler Ergebnisse ermöglicht. Dabei kann gemäß einem vorteilhaften Vorschlag der Erfindung die Verriegelung als Kugelringverriegelung ausgestaltet sein. Diese Verriegelung verriegelt die Aufnahmeeinheit gegenüber der Welle. Eine weitere Verriegelung oder stufenlose Verklemmung der Welle an sich ermöglicht es, eine Steife der Wellenübertragungen und Lager zu erzielen, die beim Drehen, also bei feststehender Werkzeugspindel, auch beim Einsatz mehrschneidiger Werkzeuge extrem unterstützt, da es hierbei besonders auf Steifigkeit ankommt. Auf diese Weise lassen sich sogenannte Minirevolverköpfe realisieren, die den Werkzeugwechsel erheblich verkürzen und darüber hinaus die Anzahl der Werkzeuge im Werkzeugmagazin erhöhen. Auch diese Verriegelung kann als Kugelringverriegelung, stufenlose Verriegelung oder Kombination beider ausgestaltet sein.

Die erfindungsgemäße Spindel kann in konventionellen Drehmaschinen eingesetzt werden. Sie wird dort als zusätzliche Spindel ergänzt. Dadurch wird die Drehmaschine multifunktional, d.h. sie verfügt nun über ein leistungsfähiges angetriebenes Werkzeug für den Einsatz zum Fräsen und Bohren, es wird die Herstellung außermittiger Formbohrungen oder -zapfen ermöglicht und schlussendlich die Herstellung von unrunden Wellen und Naben. Darüber hinaus bleiben alle Funktionen der Grundmaschine an sich vollständig erhalten.

Die erfindungsgemäße Spindel kann auch in herkömmlichen Bearbeitungszentren eingesetzt werden. Hier wird die Werkzeugspindel des Bearbeitungszentrums durch die erfindungsgemäße Werkzeugspindel ersetzt. Üblicherweise ist das Werkstück bei Bearbeitungszentren fest eingespannt und rotiert im Gegensatz zur Drehmaschine nicht.

Durch den Einsatz der erfindungsgemäßen Spindel in konventionellen Bearbeitungszentren wird das Funktionsspektrum des Zentrums deutlich erhöht. Zum einen wird Drehmaschinenfunktionalität in ein Bearbeitungszentrum integriert. Es können nunmehr mit einem Werkzeug Bearbeitungen durchgeführt werden, die ansonsten in der Maschine gar nicht oder nur mit extrem hohem Werkzeugeinsatz durch die Verwendung vieler unterschiedlicher Bearbeitungswerkzeuge durchführbar wären. Dies basiert auf der Leistungsfähigkeit der erfindungsgemäßen Spindel in Bezug auf Drehzahl, Drehmoment und die Verstellwege.

Bei dem Einsatz der Spindel in modernen Dreh-/Fraszentren wird die Dreh-/Frässpindel des Zentrums durch die erfindungsgemäße Spindel ersetzt. Dreh-/Fräszentren kombinieren die Funktionen von Drehen und Fräsen in einer Maschine. Dabei wird ein Werkstück in ein Spannfutter einer Hauptspindel gespannt. Es rotiert oder kann stillstehend bearbeitet werden. Fräsen wird im Stand oder bei langsamer Drehung ermöglicht. Durch den Einsatz der erfindungsgemäßen Spindel in einer solchen Maschine ist es nun möglich, unrunde Wellen und Naben herzustellen, darüber hinaus auch außermittige Formbohrungen oder -zapfen zu erzeugen. Weiterhin wird die Minirevolverfunktion unterstützt und es werden steifere und stabilere Verriegelungen beim Drehen und Fräsen bereitgestellt, ohne die Grundfunktionen der Maschine zu beeinträchtigen, oder den Bearbeitungsraum einzuschränken.

Die anmeldungsgemäße Werkzeugspindel bietet gegenüber dem Stand der Technik erhebliche Vorteile. In der sogenannten Drehdurchführung, das heißt der zentralen Durchführung laufen in erster Linie Hydraulikleitungen. Diese dienen der Bereitstellung von Hydraulikdruck zur Verriegelung und Bewegung der Werkzeugverstellachse der Verstelleinrichtung. Weiterhin wird der Hydraulikdruck für die sogenannte Werkzeugspannung bereitgestellt, mit welchem das Werkzeug fest arretiert wird. Hydraulikdruck für eine Unwuchtkompensation wird ebenfalls bereitgestellt, wenn diese vorhanden ist. Dabei können beispielsweise Ringsegmente in entsprechenden Ringnuten verstellt werden. Mit hohem Druck kann Kühl-/Schmierstoff bereitgestellt werden, der ebenfalls durch die Drehdurchführung bereitgestellt wird. Darüber hinaus wird pneumatischer Druck für die Werkzeuganlagekontrolle hindurchgeführt und schließlich Leitungen für das Messsystem, und zwar sowohl Energie- als auch Signalleitungen.

In vorteilhafter Weise kann das Messsystem die Signale per Funk übertragen, so dass eine zentrale Steuerung die Signale in hoher Geschwindigkeit erhalten kann. Durch die berührungslose Übertragung sind höhere Drehzahlen möglich, die Übertragung ist wartungsfrei. Zum Unrunddrehen und für die Ausnutzung moderner Werkzeuge sind hohe Drehzahlen erforderlich.

Weitere Vorteile und Merkmale der Erfindung ergeben sich aus der folgenden Beschreibung anhand der Figuren. Dabei zeigen:
- Fig. 1: eine schematische teilgeschnittene Ansicht eines Ausführungsbeispiels einer erfindungsgemäßen Werkzeugspindel und
- Fig. 2: eine Ansicht der Werkzeugaufnahmevorrichtung gemäß Fig. 1.

In den Figuren sind gleiche Elemente mit gleichen Bezugszeichen versehen. Es handelt sich um rotationssymmetrische Baugruppen, so dass zum Zwecke der besseren Überschaubarkeit die Elemente auf einer Seite einer Mittellinie mit Bezugszeichen versehen sind.

Ein Ausführungsbeispiel für eine erfindungsgemäße Werkzeugspindel 1 umfasst ein Spindelgehäuse 2 mit einer entsprechenden Anbaueinheit 3. Mit der Anbaueinheit 3 kann die Werkzeugspindel 1 in an sich bekannter Weise auf Schlitten, Schiebern, Schwenklagern und dergleichen je nach Maschine und Einsatzfall angeordnet werden. Alternativ kann die Werkzeugspindel auch in einer von der Werkzeugmaschine bereitgestellten Aufnahmehülse untergebracht werden.

Innerhalb des Gehäuses ist eine Antriebsgruppe 4 mit einem entsprechenden Motor ausgebildet. Letztendlich werden die Antriebskräfte auf eine Welle 5 aufgebracht.

Eine Werkzeugverstellvorrichtung 6 ist direkt in die Welle 5 integriert, in welche eine Werkzeugverstelleinheit 14 integriert ist. Eine Art Verschluss 15 wird von einer Werkzeugaufnahmeeinheit 11 durchragt. Eine Werkzeugschnittstelle nimmt ein Bearbeitungswerkzeug auf. Die Werkzeugverstelleinrichtung 6 ist direkt in die Welle 5 integriert , sodass die Vorrichtung in Drehbewegung versetzt werden kann. Mittels der Kolbenbaugruppe 12 kann die Werkzeugverstelleinheit 14 um eine quer zur Antriebsachse bzw. quer zur Werkzeugdrehachse liegenden Achse verstellt werden. Befindet sich in der Werkzeugaufnahmeeinheit 11 beispielsweise ein Werkzeug mit einer Schneidplatte, kann durch Verstellen der Flugkreisradius der rotierenden Schneidplatte verändert werden.

An der Werkzeugverstelleinheit 14 ist ein Meßsensorbereich 10 angeordnet.

Die auf entsprechenden Schlitten und Schiebern sowie Schwenkeinrichtungen angeordnete Spindel 1 kann gegenüber einem feststehenden oder einem drehenden Werkstück relativ axial, radial und in sonstiger je nach Einsatzfall gewünschter Weise verschoben werden. Entsprechend kann das Werkzeug an die Oberfläche des Werkstücks zur entsprechenden Bearbeitung herangeführt werden. Als Werkzeug kann in die Werkzeugaufnahmeeinheit auch ein einfacher Bohrer eingesetzt werden ebenso wie ein Fräser, gegebenenfalls unter Zwischenanordnung von Adaptern, Bohrfuttern und dergleichen. In diesem Fall ist es sinnvoll, die verstellbare Werkzeugverstelleinheit 14 gegen Verstellen zu verriegeln bzw. zu klemmen.

Im Inneren der Spindel ausgeführte Kanäle dienen der Führung von Hydraulik, Pneumatik und auch Kühlmittel, wozu entsprechende nicht gezeigte Anschlüsse vorgesehen sind. Über Anschlüsse 16 eines elektrischen Messsignalverteilers erfolgt eine Übertragung der Messsignale des Messsystems 10 an eine in den Figuren nicht näher gezeigte Steuerung.

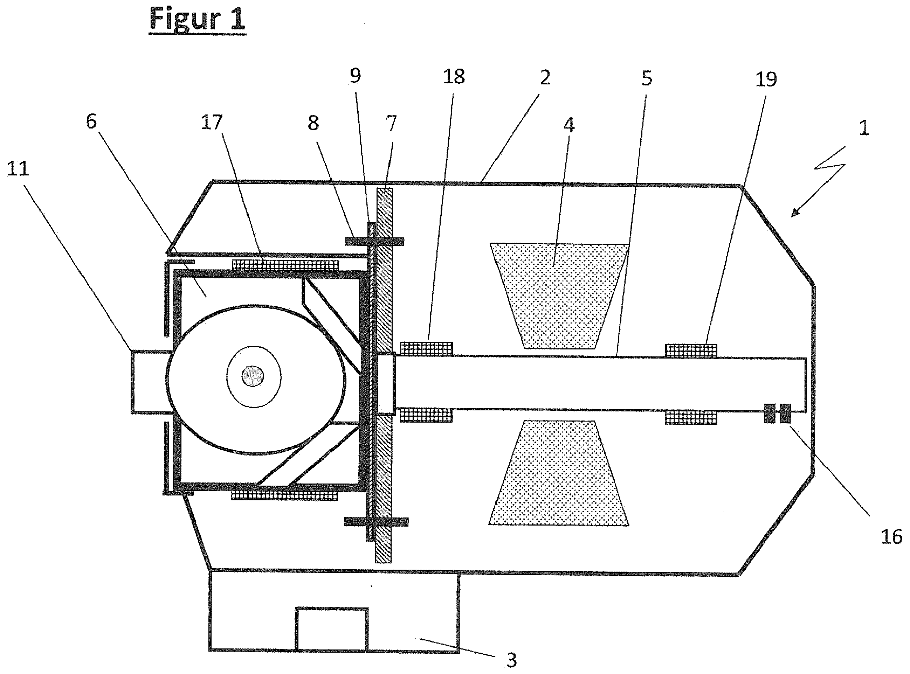

Wie insbesondere die Darstellung nach Fig. 1 erkennen lässt, erfolgt die Lagerung der Welle 5 der Spindel über eine Spindellagerung, die im gezeigten Ausführungsbeispiel über Kugellager 17, 18 und 19 verfügt.

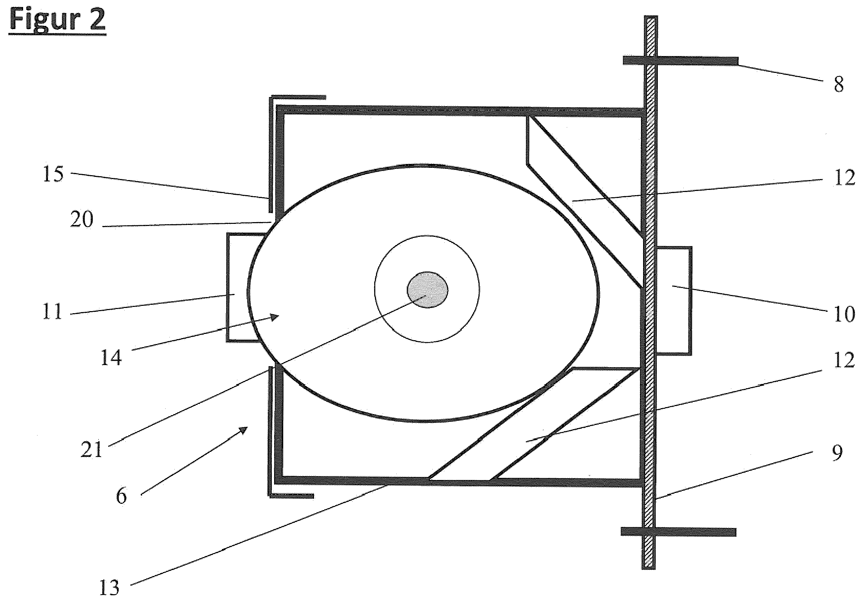

Die Werkzeugverstelleinheit 14 verschwenkt gegenüber der Welle 5 um die Schwenkachse 21, wie Figur 2 erkennen lässt. Der diesbezüglich maximale Schwenkbereich ist mit dem Bezugszeichen 20 identifiziert.

Nur beispielhaft ist im gezeigten Ausführungsbeispiel die verstellbare Werkzeugaufnahmeeinheit in einem Gehäuse angeordnet. Dieses ist mit einem Montageflansch 9 verbunden, welcher mittels Befestigungsschrauben 8 an einer spindelseitigen Basisplatte 7 befestigbar ist.

Die Beschreibung des Ausführungsbeispiels dient nur der Erläuterung und ist nicht beschränkend.

**Bezugszeichenliste**

| | | | |
|---|---|---|---|
| 1 | Werkzeugspindel | 17 | vordere Lagerung |
| | | | |
| 2 | Spindelgehäuse | 18 | vordere Lagerung |
| | | | |
| 3 | Anbaueinheit | 19 | hintere Lagerung |
| | | | |
| 4 | Antriebsgruppe | 20 | Schwenkbereich |
| | | | |
| 5 | Welle | 21 | Schwenkachse |
| | | | |
| 6 | Werkzeugverstellvorrichtung | | |
| | | | |
| 7 | Basisplatte | | |
| | | | |
| 8 | Befestigungsschraube | | |
| | | | |
| 9 | Montageflansch | | |
| | | | |
| 10 | Messsensorbereich | | |
| | | | |
| 11 | Werkzeugaufnahmeeinheit | | |
| | | | |
| 12 | Kolbenbaugruppe | | |
| | | | |
| 13 | Gehäuse | | |
| | | | |
| 14 | Werkzeugverstelleinheit | | |
| | | | |
| 15 | Verschlussdeckel | | |
| | | | |
| 16 | Anschlüsse | | |

## Patentansprüche

1. Werkzeugspindel (1) mit einem Spindelgehäuse (2), einem Drehantrieb, und einer Werkzeugaufnahmeeinheit (11)
**dadurch gekennzeichnet,**
**dass** die Werkzeugaufnahmeeinheit (11) innerhalb des Spindelgehäuses (2) und diesem gegenüber bewegbar angeordnet ist.

2. Werkzeugspindel nach Anspruch 1, mit einem auf eine rotierende Antriebsachse wirkenden Antriebsmotor und der um die Antriebsachse drehbar angeordneten Werkzeugaufnahmeeinheit (11), welche über eine Getriebekette mit der Antriebsachse verbunden ist, wobei die Werkzeugaufnahmeeinheit (11) in einem Gehäuse (13) angeordnet ist und gegenüber dem Spindelgehäuse (2) um eine quer zur Antriebsachse liegenden Achse bewegbar ist.

3. Werkzeugspindel nach einem der vorhergehenden Ansprüche, **dadurch gekennzeichnet, dass** das Spindelgehäuse (2) zylindrisch ausgebildet ist.

4. Werkzeugspindel nach einem der vorangehenden Ansprüche, **dadurch gekennzeichnet, dass** die Werkzeugaufnahmeeinheit (11) mittels einer Verriegelung einer Werkzeugverstelleinheit (14) gegenüber der Welle (5) mechanisch verriegelbar ist.

5. Werkzeugspindel nach einem der vorangehenden Ansprüche, **dadurch gekennzeichnet, dass** innerhalb der Werkzeugspindel (1) Kanäle zur Kühlmittelführung ausgebildet sind.

6. Werkzeugspindel nach einem der vorangehenden Ansprüche, **dadurch gekennzeichnet, dass** wenigstens eine in der Getriebekette befindliche Einheit mit einer Einheit zur Unwuchtkompensation versehen ist.

7. Werkzeugspindel nach Anspruch 8, **dadurch gekennzeichnet, dass** die Einheit zur Unwuchtkompensation verschiebbare Ringsegmente aufweist.

8. Werkzeugspindel nach einem der vorangehenden Ansprüche, **dadurch gekennzeichnet, dass** die Welle verriegelbar ist.

9. Werkzeugspindel nach einem der vorhergehenden Ansprüche, **dadurch gekennzeichnet, dass** sich die Werkzeugverstelleinheit innerhalb der vorderen und hinteren Lagerung der Antriebswelle befindet.

10. Werkzeugspindel nach einem der vorhergehenden Ansprüche, **dadurch gekennzeichnet, dass** die Werkzeugverstelleinheit in die Welle der Werkzeugspindel integriert ist.

11. Werkzeugspindel nach einem der vorhergehenden Ansprüche, **dadurch gekennzeichnet, dass** Drehdurchführungskanäle für Hydraulik ausgebildet sind.

12. Werkzeugspindel nach einem der vorhergehenden Ansprüche, **dadurch gekennzeichnet, dass** Drehdurchführungskanäle für Pneumatik ausgebildet sind.

13. Werkzeugspindel nach einem der vorhergehenden Ansprüche, **dadurch gekennzeichnet, dass** Drehdurchführungskanäle für Elektrik ausgebildet sind.
